# EUROPEAN PATENT APPLICATION

(11) **EP 4 000 989 A1**
(43) Date of publication of application: **25.05.2022**
(21) Application number: 20208718.5
(22) Date of filing: 19.11.2020
(51) Int. Cl.: B60L 53/16, H01R 13/506, H01R 13/533

(54) **ELECTRIC VEHICLE CHARGING CONNECTOR AND HEAT PIPE**

(71) Applicant: ABB Schweiz AG, 5400 Baden (CH)
(72) Inventor: HEMRLE, Jaroslav, 5405 Baden-Dättwil (CH); KAUFMANN, Lilian, 5413 Birmenstorf (CH); FAHY, Elise, 8952 Schlieren (CH); GARCIA-FERRE, Francisco, 5400 Baden (CH); KHEIRI, Pedram, 5212 Hausen (CH)
(74) Representative: Maiwald Patent- und Rechtsanwaltsgesellschaft mbH

(57) **Abstract**

The present invention relates to a heat pipe (106) configured to be attached to a heat source inside an electric vehicle charging connector (100) for a vehicle (800). The heat pipe (106) comprises a metallic heat reception portion (107), a heat guiding portion, and a heat dissipating portion (109). The heat pipe further comprises an insulating sleeve (121) around the heat reception portion (107) configured to electrically insulate the metallic heat reception portion from the heat source.

## Description

### FIELD OF THE INVENTION

The present invention relates to an electric vehicle charging connector, a charging station, a heat pipe, and the use of the heat pipe in an electric vehicle charging connector.

### BACKGROUND

One limiting factor in charging cables for electric vehicles is the heat that is generated when high currents flow through the cable and the electrical connector from the charging station to the battery of a vehicle. The heat may be actively conducted away from the heat sources using liquids. In this way current rates over 500 A are achieved. For this kind of cooling arrangements are required that comprise and conduct the liquid from heat sinks to the heat sources and back. Additional devices such as pumps are necessary. Alternatively, passive cooling is possible. However, with existing designs only current ratings up to 200 A are achievable. Passive cooling needs a design as hollows in the enclosure or material of the enclosure for not insulating the heat in the enclosure. Such designs may not be effective or lead to a high weight of the charging cable.

### SUMMARY

The conventional solutions such as active cooling with liquids are expensive and comprise potentially environmentally unfriendly coolants. Other systems may be ineffective, or associated with unfavorable design properties. Therefore, there may be a desire to provide an improved battery charging connector that may by operated at low costs and that allows easy maintenance.

The problem is solved by the subject-matter of the independent claims. Embodiments are provided by the dependent claims, the following description and the accompanying figures.

The described embodiments similarly pertain to the electric vehicle charging connector, the charging station, the heat pipe, and the use of the heat pipe in an electric vehicle charging connector. Synergetic effects may arise from different combinations of the embodiments although they might not be described in detail.

Technical terms are used by their common sense. If a specific meaning is conveyed to certain terms, definitions of terms will be given in the following in the context of which the terms are used.

According to a first aspect, a heat pipe configured to be attached to a heat source inside an electric vehicle charging connector is provided. The heat pipe comprises a metallic heat reception portion, a metallic heat guiding portion, and a heat dissipating portion. The heat pipe further comprises an insulating sleeve at least around the heat reception portion configured to electrically insulate at the metallic heat reception portion from the cable.

The insulating sleeve separates the metallic heat receiving portion of the heat pipe from the metal such as copper of the power contact or the cable at the power contact. The insulating sleeve ensures electrical protection with only minor degradation of the thermal performance. The thermal contact interfaces, for example between the metal and the insulating material, may be improved by thermally conducting paste. The insulating material may be a ceramic or plastic material. The minimum parts to be insulated are the parts that would otherwise directly in connection with the power contacts or the cable under voltage. However, also a sleeve around the entire heat pipe would be possible.

According to an embodiment, the heat pipe is configured to be connected to electrical ground with respect to the cable. The heat pipe may be connected at any of its parts to the electrical ground of the cable. This ensures grounding of the heat pipe in a case where a high mechanical damage occurred that would also compromise the ceramic sleeve. Additionally, this measure may allow a protection system of a charger to detect such a breach to the electrical ground and to disconnect the failed connector.

According to an embodiment, the heat dissipating portion comprises a tube extending the heat guiding portion and fins, wherein the fins are mounted on the tube, and wherein the fins are made of electrically insulating material. The fins in this case are individually mounted, for example, equally spaced on the tube. The insulating material may be pure plastic or ceramic. Pure plastic materials have a conductivity at the order of 0.1 W/mK such that very large heat transfer areas would be required. More preferably, materials with conductivities of, for example, the order of 1 W/mK may be chosen. Such a conductivity can be achieved with, for example, commercially available so-called "high conductivity plastics", or ceramic materials that can provide higher conductivity of the order of 10 W/mK. With such materials small fins and volume saving can be achieved, assuming mechanical design and robustness is provided.

According to an embodiment, the heat dissipating portion comprises a tube and fins, wherein the tube and the fins extend the metallic heat guiding portion, and wherein the tube and the fins are coated by an electrically insulating layer. The electrically insulating layer may consist of, for example, plastic or ceramic. From the view of manufacturing, the heat pipe with condenser is assembled first, and in a further step the insulating layer is applied, for example by coating.

According to an embodiment, the heat dissipating portion comprises a tube and fins, wherein the tube and the fins extend the heat guiding portion, and wherein the tube and the fins are sleeved with a sleeve forming an electrically insulating layer. The sleeve may be one compact part or consist of separated parts for each of the fins. In the latter case, the single already sleeved fin elements are stacked together one after the other. In both cases, before assembling the heat pipe with the condenser, the fins are sleeved, for example by a shrink tubing technique. The insulated fins are then connected to the heat pipe.

According to an embodiment, the heat dissipating portion comprises a tube extending the heat guiding portion, and fins. The fins are an integral piece of fins consisting of an insulating material, and the tube is sleeved by the integral piece of fins. The integral fin-sleeve may, for example, be slipped on the metallic tube before assembling the tube and the heat pipe.

According to an embodiment, the surface area heat in the dissipating portion is painted. By painting the heat dissipation areas such as the fins for example with black color, the thermal resistance can be reduced and heat dissipation improve.

According to an embodiment, the heat source is a power contact or the cable at the power contact. The power contact is the actual heat source. However, due to the low thermal resistance between the cable and the power contact, attaching the evaporator to the cable at or near the power contact would have nearly the same effect. Both, cable and power contact are metallic so that the insulation ensures that the heat pipe is not under voltage.

According to an aspect, an electric vehicle charging connector is provided, comprising an external enclosure, an inner enclosure, and a heat pipe. The external enclosure is configured to receive a cable in a back end area of the electric vehicle charging connector and to enclose an inner enclosure at a front end area of the electric vehicle charging connector. The inner enclosure is arranged in the front end area of the electric vehicle charging connector, configured to receive the cable from the external enclosure and guide the cable to a power contact of the electric vehicle charging connector. The electric vehicle charging connector further comprises a heat pipe as described herein attached to a heat source in the inner enclosure and configured to guide heat from the heat source in the in the inner enclosure to a free space in the external enclosure. The heat pipe comprises an insulating sleeve, wherein only the insulating sleeve of the heat pipe is in contact with the heat source.

According to an embodiment, the battery of the charging connector comprises the cable, wherein the cable comprises an arrangement configured to receive a grounding cable from metallic portions of the heat pipe such that the heat pipe is electrically connected to ground with respect to a voltage of the cable.

The heat pipe may be connected at any of its metallic parts to the ground of the cable. This ensures grounding of the heat pipe or at least the part in case of a high mechanical damage that would also compromise the ceramic sleeve. Additionally, a protection system of the charger may detect such breach to the ground and disconnect the failed connector.

According to an embodiment, the external enclosure in the area of the condenser is equipped with perforations or slits designed with respect to their number and size such that in dependence on the heat dissipation characteristics and insulation characteristics of the heat dissipation portion a total target protection with respect to thermal protection of a user, mechanical protection of the fins, electric insulation from the user in case of compromised insulation by the insulating sleeve, and dirt protection is provided.

Various examples of designs for the heat dissipation portion have been discussed above and are shown in the figures. The examples show designs that provide different heat dissipation characteristics and insulation characteristics of the heat dissipation portion, for example using insulating material for the fins or sleeves covering the fins and the tube on which the fins are fixed. If, for example, the fins have a robust design and provide already a good insulation protection due to a relatively thick sleeve covering the fins and the tube, then the openings or slits of the perforation may be large so that a sufficient air flow can be ensured balancing the worse heat dissipation characteristics compared to a thin insulation layer. With respect to the dimensioning of the size and numbers of the slits, further aspects such as mechanical stability of the fins and, eventually, environment aspects such as dirt and humidity have to be taken into account. For example, if the mechanical stability is low, a higher external damage protection may be required such that the openings have to be designed smaller and the external case is in general more robust.

According to an embodiment, the inner enclosure is fully sealed and, for example, designed such that it provides high protection from mechanical, water, dust or other damages, and comprises a sealed pass through such that the heat receiving portion of the heat pipe is arranged inside the sealed internal enclosure and the heat dissipating portion is outside the sealed internal enclosure and inside the external enclosure.

According to a further aspect, a charging station is provided, comprising an electric vehicle charging connector as described in this disclosure.

According to a further aspect, the use of a heat pipe, such as the heat pipe presented in this disclosure, in an electric vehicle charging connector as described herein is provided.

The invention thus provides a charging connector or charging plug where electrical insulation using an insulating, e.g., ceramic sleeve at the heat receiving portion of the heat pipe is ensured by at least one measure. In principle, the heat pipe is completely separated from the cable voltage. The presented design elements ensure that the condenser part of the heat pipe system fulfills the required protection of user from electric and thermal dangers, while ensuring required thermal performance.

These and other features, aspects and advantages of the present invention will become better understood with reference to the accompanying figure and the following description. Identical or equivalent elements are in principle provided with the same reference signs.

### SHORT DESCRIPTION OF THE FIGURES

Fig. 1 shows a diagram of the electric vehicle charging connector, on which embodiments may be based on.
Fig. 2a shows a diagram of the electric vehicle charging connector of Fig. 1 with additionally a heat pipe, on which embodiments may be based on.
Fig. 2b shows a thermal network diagram of the electric vehicle charging connector of Fig. 2a.
Fig. 3a shows an illustration of a twin heat pipe with two heat pipes in parallel with condenser fins.
Fig. 3b shows an illustration of a grid spanned over openings of the electric vehicle charging connector of Fig. 2a.
Fig. 4 shows a diagram of an electric vehicle charging connector with an insulated heat pipe according to an embodiment.
Fig. 5 shows diagrams of insulated heat pipe fins according to an embodiment.
Fig. 6 shows diagrams of examples of enclosure opening designs for insulated heat pipe fins according to an embodiment.
Fig. 7 shows a diagram of the temperature drop across solid insulation over insulation layer thickness.
Fig. 8 shows schematic diagram of a charging station connected to a vehicle.

### DETAILED DESCRIPTION OF EMBODIMENTS

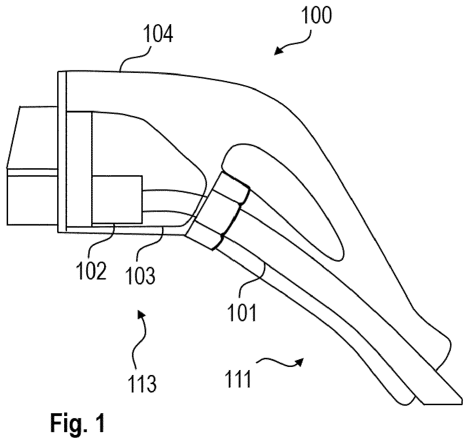

Fig. 1 shows a diagram of an electric vehicle charging connector design, on which embodiments may be based on. Such an electric vehicle charging connector 100 may comprise essentially an external casing or enclosure 104, an inner casing or enclosure 103, and a cable 101 for conducting charge current from a charge station to a battery charge socket. The external enclosure 104 is configured to receive a cable 101 in a back end area 111 of the electric vehicle charging connector 100 and to enclose the inner enclosure 103 at a front end area 113 of the electric vehicle charging connector. The inner enclosure 103 is arranged in the front end area 113 of the electric vehicle charging connector 100, configured to receive the cable 101 from the external enclosure 104 and guide the cable to a power contact of the electric vehicle charging connector 100. The cable 101 is linked to connector 102 inside of an internal casing 103. The function of the internal casing 103 is to ensure electrical insulation, mechanical strength, prevent water and dirt contamination. For this reason, casing 103 is massively sealed, and comprises in some designs also nearly completely potted structure. This structure is further enclosed in external casing 104. The purpose of the structure is to provide a handle and other functions that interact with the user. One of the reasons for separating casing 103 and 104 is weight. The severe functional requirements on internal casing 103 lead to a fairly robust and heavy design, that is also potentially "sealed for life". On the other hand, the bulkier external casing 104 is built in fairly light manner, with focus on weight reduction and comfort.

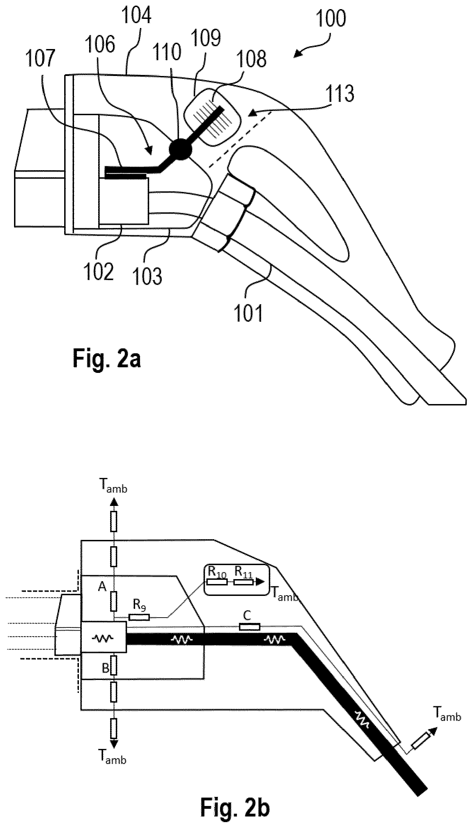

Fig. 2a shows a diagram of the electric vehicle charging connector 100 of Fig. 1 with additionally a heat pipe 106, on which embodiments may be based on. The electric vehicle charging connector 100 in Fig. 2a has essentially the same design as the electric vehicle charging connector 100 of Fig. 1, however, shows heat pipe 106 as heat conductor that is arranged inside the enclosure 104, and partly inside enclosure 103. The heat receiving part, that is, the evaporator 107 of the heat pipe in Fig. 2a is attached in a way to be in close thermal contact with the heat source in the compartment 102, or hot spot, in particular close to or connected to the power contacts of the connector. The heat pipe then extracts the heat from the internal enclosure 103, which can be highly sealed with respect to electric, water, dust and mechanical protection of the contact and related parts. The heat is then transported from the evaporator via sealing point 110 to the condenser 109 with condenser fins 108. The heat pipe 106 ejects heat to the environment in area 109, which is enclosed by the external enclosure 104, which requires lower protection and mainly functions as interface to the user. The heat is ejected to the environment from the condenser part 109 of the heat pipe 106. There may be one heat pipe or several heat pipes per phase in case of an AC charger.

Fig. 2b shows the corresponding thermal network diagram. The heat pipe 106 in the inner enclosure 103 is taken into account by R9, and in the external enclosure by the resistances R10 corresponding to the pipe in the external enclosure 104, and R11 corresponding to the fins 108.

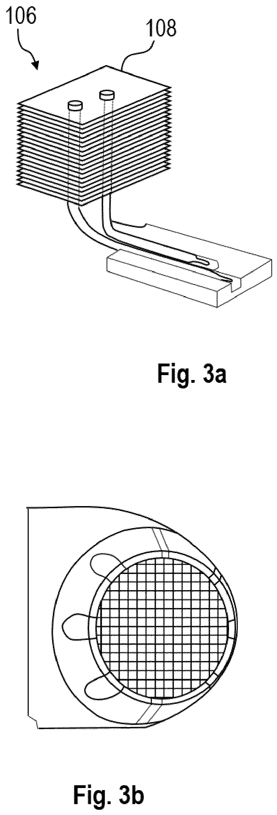

The heat absorbed by the evaporator end 107, R9 of the heat pipe 106 is led by the heat pipe 106 to the condenser area 106, R10, R11. R9 is low due to the design. To reduce R11, the condenser part 109 of the heat pipe 106 is well exposed to the ambient air. In the proposed design, in the area 109, the external enclosure 104 may provide air channels or openings which expose the heat pipe condenser end 109 to the ambient air. These channels may consist, for example, of an open hollow, which on the side of the external enclosure 104 may have a cover to protect the user from contact with the heat pipe 106. An illustration of such a cover with a grid 302 is shown in Fig. 3b, where the heat pipe condenser 109 is exposed to the environment, where it is brought to suitable surface of the external enclosure 104 with fins 108 exposed, possibly just covered by a protective grid 302.

Fig. 3a shows a twin heat pipe 106 with two heat pipes in parallel with a set of condenser fins 108 attached to the pipes. The condenser fins 108 improve the heat emission due to the enhanced surface at the heat pipe condenser end, and reduce therefore the resistance R11. The shown fins may be adapted to the available space in the external enclosure 104.

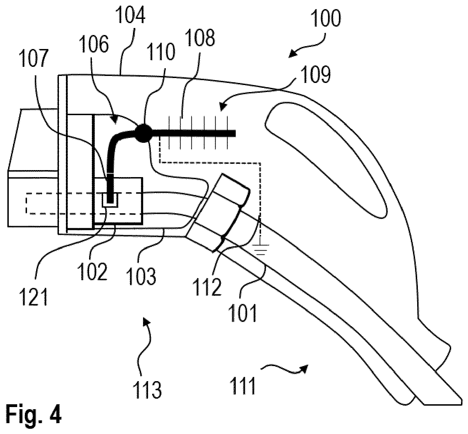

Fig. 4 shows a diagram of an electric vehicle charging connector with an insulated heat pipe 106. The reference signs in Fig. 4 correspond to the reference signs in the previous figures. The cable 101 contains the Cu-conductors for the power contacts, the ground, and the signal contacts. The connector 100 further comprises a compartment or holder 102 for the power contacts 102, and enclosure 104. The insulation is achieved using for example a ceramic sleeve 121 that separates the copper heat pipe 106 from the copper power connector in compartment 102 as a first measure for electric protection of the heat pipe 106.

The heat pipe evaporator 107 is at best embedded directly in the area of hot spot, i.e. the contact area. The internal diameter of the sleeve is, for example, 4 mm, which is equal to the heat pipe diameter, and the external diameter is, for example, 5 mm. The thermal contact interfaces may be improved by thermally conducting paste, but overall, the ceramic sleeve provides only minor degradation of the thermal performance and forms one of the electric insulation protection measures. In principle, the heat pipe 106 is completely separated from the cable voltage. The heat pipe 106 can also be grounded as shown by the dotted line 112 as a further electric protection measure. The heat pipe may be connected at any of its part to the ground of the cable. This would ensure grounding of the part in case of high mechanical damage that would also compromise the ceramic sleeve 121, and additionally, a protection system of the charger may detect such breach to the ground and disconnect the failed connector.

Inside the internal, highly protective internal enclosure 103, the heat pipe106 is bent by 90°, and passes out of the internal enclosure 103 through point or sealing point 110. It is to be noted that up to point 110, the internal enclosure is designed to be fully sealed with very high protection from mechanical, water, dust or other damages.

In order to fulfill higher protection requirements, the following additional measures may be taken. In particular, it is proposed to use a condenser that is itself electrically insulating, additionally to the ceramic sleeve insulation.

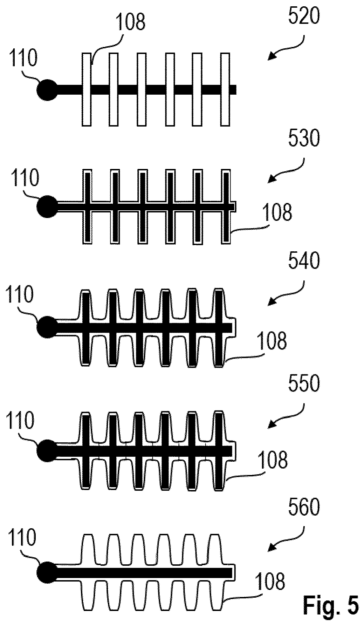

The schematics in Fig. 5 only show the part of heat pipe in the area of the external enclosure 104 that is beyond point 110 in Fig. 4. Metal parts are drawn as solid black areas, whereas insulating parts are white areas surrounded by a line.

The design 520 shows heat pipe 106 which is potentially exposed without protection, but the fins 108 themselves are manufactured from electrically insulating material. As will be shown later, pure plastic materials with conductivity at the order of 0.1 W/mK would require a very large heat transfer area and would lead to complications, but materials with conductivities of the order of 1 W/mK would provide an reasonable option. This can be achieved with commercially available "high conductivity plastics", or even ceramic materials that can provide even higher conductivity of the order of 10 W/mK, in which case small fins and volume saving can be achieved, assuming mechanical design and robustness is provided.

Design 530 presents another option, which would lead to high thermal performance. In this design the condenser is prepared from metal fins as in previous designs, but the fins are additionally coated by an electrically insulating layer, which may be plastic or ceramic. As will be shown later, even layers of high thickness, for example about 0.5 mm or more, would provide only a minor thermal performance degradation.

Designs 540, 550, and 560 extend this concept by proposing to manufacture a complete "sleeve" which would form the fins with insulating layer. This may be one compact part as in 540, or be separated to fin elements stacked together, as in 550. In case of 560, the sleeve may be manufactured from robust piece of electrically insulating materials with reasonable thermal conductivity, and cover the whole heat pipe from point 110.

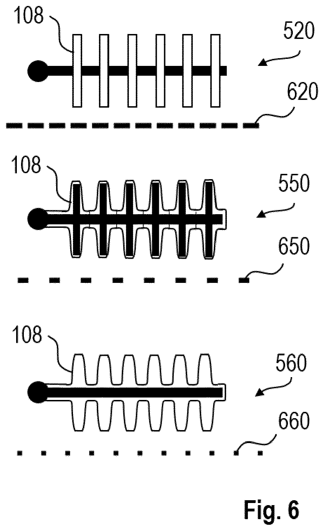

Fig. 6 shows diagrams of examples of enclosure opening designs for insulated heat pipe fins 108 according to an embodiment. In Fig. 6, three levels of possible protection are depicted. It is to be noted that the primary protection is the internal enclosure 103. The purpose of the external protection is then primarily:
- ensure electric insulation from the user in case of compromised insulation by the insulating sleeve 121,
- ensure mechanical protection of the fins 108 (depending on its robustness),
- ensure thermal protection of the user from touching warm parts,
- depending on need, reduce dirt exposure of the fins 108.

In the combination 520/620, plastic fins 108 are inserted on the heat pipe, separated by spacers. The spacers may be potentially also plastic, ensuring full coverage of the heat pipe. The external enclosure in the area of the condenser would be equipped with perforations or slits 620 to provide protection while ensuring good exposure of the condenser to airflow by natural convection. The enclosure should also enable radiative heat transfer. This enclosure has been proved to be feasible, however, constraining the slots too much leads to rapid degradation of the thermal performance since the heat transfer from the condenser fins 108 to the ambient air is by far the highest thermal resistance in the system.

In the combination 550/660, it is assumed that the fins 108 have a high level of electric insulation already included. In this design, the slits can be larger and good airflow can be ensured. The primary function of the protection in this case is ensuring sufficient protection of the insulating layer on the fins 108 from external damage.

The combination 560/660 provides only heat protection from the user. The design, however, assumes that the insulating fins 108 are, for example, manufactured from a solid block, with good mechanical and electric properties. In this case, the function of the external enclosure layer is only heat protection such that the user is protected from touching the fins 108. In principle, this case may also be realized by having the fin structure integrated as directly the external surface of the enclosure itself.

As mentioned above, the main thermal resistance in the whole system is heat transfer from the fins 108 to the ambient air, by natural convection and radiation. The main methods to ensure are:
- Provide sufficient surface area of the fins 108. It has been shown that even with plastic fins 108 with good thermal conductivity, for example six fins 108 may be sufficient, provided other parts of the system perform well. The thickness, exposure of the fin surface, their pitch are important elements to design.
- Radiative heat transfer contributes to a significant part to the heat transfer and it has been shown that painting the surface area at high emissivity improves thermal performance significantly.
- Constraining air flow around the fins 108 by a too restrictive external cover can reduce the heat transfer quite dramatically.

In effect, a preferred strategy is to ensure electric insulation of the fins 108 where even materials with relatively low thermal conductivity may be used, which is still preferable from attempting to increase the protection by more restricted air flow.

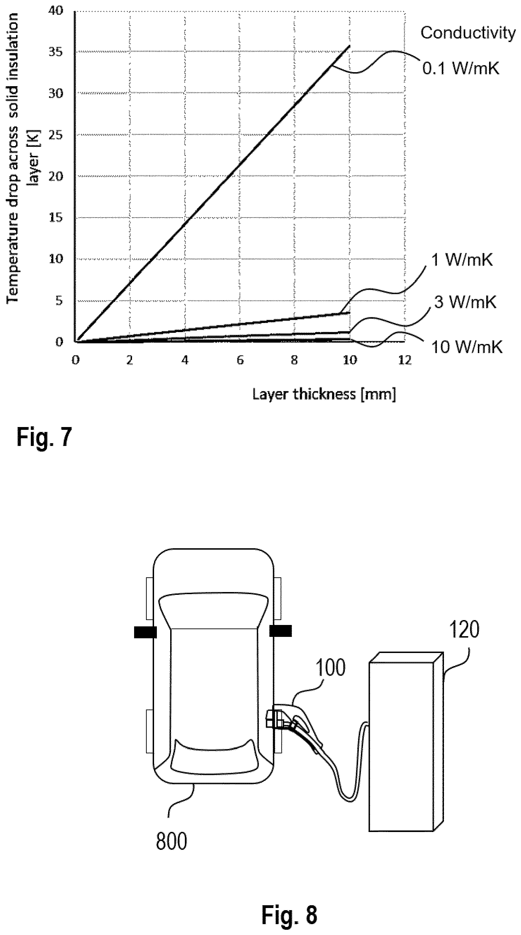

Fig. 7 presents a diagram of the temperature drop across solid insulation over insulation layer thickness showing the impact of insulating layer on the fins at variable thickness for materials with different thermal conductivity. It is seen that even very thick layers are allowable with materials of conductivity of the order of 1 W/mK, and that even coatings of plastic at 0.1 W/mK would still be acceptable at a level of a few mm.

Tests with commercially available plastic fins with thermal conductivity about 3 W/mK. showed that this level of conductivity is sufficient for fully plastic fins. The thermal performance can be improved dramatically by combining arrangements with an air fan, which may operate, for example temporarily to reduce peak loads.

Fig. 8 shows as an example a schematic diagram of a charging station 120 connected to a vehicle 800 via an electric vehicle charging connector 100. The connection of the electric vehicle charging connector 100 to the charging station 120 is fixed, so that the electric vehicle charging connector 100 is part of the charging station 120.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A heat pipe (106) configured to be attached to a heat source inside an electric vehicle charging connector (100) for a vehicle (800);
wherein the heat pipe (106) comprises a metallic heat reception portion (107), a heat guiding portion, and a heat dissipating portion (109);
and wherein the heat pipe further comprises an insulating sleeve (121) at least around the heat reception portion (107) configured to electrically insulate at least the metallic heat reception portion from the heat source.

2. The heat pipe (106) according to claim 1, further configured to be connected to electrical ground with respect to the cable.

3. The heat pipe according to claim 1 or 2, wherein the heat dissipating portion (109) comprises a tube extending the heat guiding portion, and fins (108);
wherein the fins (108) are mounted on the tube; and
wherein the fins (108) are made of electrically insulating material.

4. The heat pipe (106) according to any claim 1 or 2, wherein the heat dissipating portion (109) comprises a tube and fins (108);
wherein the tube and the fins extend the heat guiding portion; and
wherein the tube and the fins are coated by an electrically insulating layer.

5. The heat pipe (106) according to claim 1 or 2, wherein the heat dissipating portion (109) comprises a tube and fins;
wherein the tube and the fins extend the heat guiding portion; and
wherein the tube and the fins are sleeved with a sleeve forming an electrically insulating layer.

6. The heat pipe (106) according to claim 1 or 2, wherein the heat dissipating portion comprises a tube extending the heat guiding portion, and fins;
wherein the fins are an integral piece of fins of an insulating material; and
wherein the tube is sleeved by the integral piece of fins.

7. The heat pipe (106) according to one of the previous claims, wherein the surface area in the heat dissipating portion is painted.

8. The heat pipe (106) according to one of the previous claims, wherein the heat source is a power contact or a cable (101) at the power contact.

9. An electric vehicle charging connector (100) comprising:
an external enclosure (104) configured to receive a cable (101) in a back end area (111) of the electric vehicle charging connector (100) and to enclose an inner enclosure (103) at a front end area (113) of the electric vehicle charging connector (100);
the inner enclosure (103) is arranged in the front end area (113) of the electric vehicle charging connector (100), configured to receive the cable (101) from the external enclosure (104) and guide the cable to a power contact of the electric vehicle charging connector (100);
a heat pipe (106) according to one of claims 1 to 8 attached to a heat source in the inner enclosure (103), configured to guide heat from the heat source in the in the inner enclosure (103) to a free space in the external enclosure (104), and comprising an insulating sleeve (121), wherein only the insulating sleeve (121) of the heat pipe (106) is in contact with the heat source.

10. The electric vehicle charging connector (100) according to claim 9, wherein the electric vehicle charging connector (100) comprises the cable, and wherein the cable comprises an arrangement configured to receive a grounding cable from metallic portions of the heat pipe such that the heat pipe is electrically connected to ground with respect to a voltage of the cable.

11. The electric vehicle charging connector (100) according to claim 9 or 10, wherein the external enclosure (104) in an area of the heat dissipating portion (109) comprises perforations or slits designed with respect to their number and size such that in dependence on the heat dissipation characteristics and insulation characteristics of the heat dissipation portion (109) a total target protection with respect to thermal protection of a user, mechanical protection of the fins, electric insulation from the user in case of compromised insulation by the insulating sleeve (121), and dirt protection is provided.

12. The electric vehicle charging connector (100) according to any of claims 9 to 11, wherein the inner enclosure (103) is fully sealed and further comprises a sealed pass through (110) such that the heat receiving portion of the heat pipe (106) is arranged inside the sealed internal enclosure (102) and the heat dissipating portion (109) is outside the sealed internal enclosure (103) and inside the external enclosure (104).

13. Charging station (120) comprising an electric vehicle charging connector (100) according to any of claims 9 to 12.

14. Use of a heat pipe (106) according to any of claims 1 to 8 in an electric vehicle charging connector (100) according to any of claims 9 to 12.
